# EUROPÄISCHE PATENTSCHRIFT

(11) **EP 1 770 299 B1**
(45) Veröffentlichungstag und Bekanntmachung des Hinweises auf die Patenterteilung: **13.03.2013**
(21) Anmeldenummer: 06019328.1
(22) Anmeldetag: 15.09.2006
(51) Int. Cl.: F16D 23/12, F16D 65/14, G05G 7/04

(54) **Hebelsystem**
Lever mechanism
Mécanisme à levier

(30) Priorität: 29.09.2005 DE 102005046882; 16.02.2006 DE 102006007125
(43) Veröffentlichungstag der Anmeldung: 04.04.2007
(73) Patentinhaber: Schaeffler Technologies AG & Co. KG, 91074 Herzogenaurach (DE)
(72) Erfinder: Renfer, Alexander, 77815 Bühl (DE); Friedmann, Oswald, 77839 Lichtenau (DE); Ehrlich, Matthias, 77815 Bühl (DE); Hirt, Joachim, 77704 Oberkirch (DE); Mán, Lászlo, Dr., 77833 Ottersweier-Unzhurst (DE); Greb, Peter, 77815 Bühl (DE); Hickling, Gregory, 76229 Karlsruhe (DE); Wagner, Uwe, 77815 Bühl (DE); Berger, Reinhard, Dr., 77815 Bühl (DE)

(56) Entgegenhaltungen:
- EP-A- 1 717 472
- WO-A-01/44677
- WO-A-2007/134563
- DE-A1- 19 723 394
- DE-A1-102004 009 832

## Beschreibung

Die vorliegende Erfindung betrifft ein Hebelsystem zur Betätigung einer Kupplung, insbesondere einer Kupplung im Antriebsstrang eines Kraftfahrzeuges, umfassend einen Hebel, der an einer Seite gelenkig gelagert ist und mit der anderen Seite in Wegverbindung mit einem Andrückmittel ist, wobei sich der Hebel mit einem auf einer Kurvenbahn gelegenen Auflagerpunkt in einem in radialer Richtung verschiebbaren Schlitten, der mittels einer motorisch angetriebenen Spindel verschiebbar ist, abstützt.

Ein gattungsbildendes Hebelsystems ist beispielsweise aus der DE 10 2004 009832 bekannt. Bei dem dort vorgestellten Hebelsystem ist der Hebel entweder gehäuseseitig axial in Richtung der Kupplungsachse verschiebbar gelagert, so dass die auf die Kupplung bzw. das Andrückmittel ausgeübte Ausrückkraft aus dem Kräftegleichgewicht zwischen Hebelfeder und der gehäuseseitigen Feder, an der sich der Hebel abstützt, bei einer Drehung um einen Auflagerpunkt herrührt, oder gehäuseseitig drehbar aber nicht axial verschiebbar gelagert, sodass die Ausrückkraft allein durch die Verschiebung des Auflagerpunktes verändert wird.

Nachteilig an bekannten Hebelsystemen ist insbesondere, dass die auf die Spindel ausgeübte Axialkraft und damit das durch den Antriebsmotor zu erzeugende Drehmoment über den Verschiebeweg stark schwankt. Ein weiterer Nachteil ist, dass der funktionale Zusammenhang zwischen Verschiebeweg und Öffnungsweg der Kupplung von der Federcharakteristik der Hebelfeder sowie einem möglichen Verschleiß der Kupplungsbeläge abhängt, mithin über die Lebensdauer stark schwankt.

Eine Aufgabe der vorliegenden Erfindung ist es daher, ein Hebelsystem der eingangs genannten Art bereitzustellen, bei dem die zuvor genannten Nachteile vermieden werden.

Dieses Problem wird gelöst durch ein Hebelsystem zur Betätigung einer Kupplung, insbesondere einer Kupplung im Antriebsstrang eines Kraftfahrzeuges, umfassend einen Hebel, der an einer Seite um ein Gelenk drehbar gelagert ist und mit der anderen Seite in Wirkverbindung mit einem Andrückmittel ist, wobei sich der Hebel mit einem auf einer Kurvenbahn gelegenen Auflagerpunkt an einem in radialer Richtung verschiebbaren Schlitten, der mittels einer motorisch angetriebenen Spindel verschiebbar ist, abstützt, wobei die Kurvenbahn eine solche Kurvenform aufweist, dass der Verschiebeweg des Andrückmittels eine vorgegebene Funktion des Verschiebeweges des Schlittens ist. Vorzugsweise ist vorgesehen, dass die Kurvenbahn eine solche Kurvenform aufweist, dass der Verschiebeweg des Andrückmittels proportional zum Verschiebeweg des Schlittens ist.

Das Andrückmittel ist vorzugsweise ein Andrückmittel, das mit einer Hebelfeder einer Kupplung verbunden ist, wobei das Andrückmittel in Wirkverbindung mit der Hebelfeder ist. Unter Wirkverbindung wird hier verstanden, dass insbesondere axial in Richtung der Kupplungsachse wirkende Kräfte übertragen werden, radial dazu aber beispielsweise Ausgleichsbewegungen möglich sein können. Unter Kurvenbahn wird die dem Schlitten zugewandte Kontur des Hebels verstanden. Der Kontaktwinkel zwischen Hebel und Schlitten im Auflagerpunkt ist bei dem erfindungsgemäßen Hebelsystem rein geometrisch bedingt, also durch die Verschiebestellung des Schlittens und nicht wie im Stand der Technik zusätzlich abhängig von der Federcharakteristik der Hebelfeder. Ein Vorteil des erfindungsgemäßen Hebelsystems ist es daher, dass die Beziehung zwischen Öffnungsweg der Kupplung und Verschiebeweg des Schlittens, dieser wird durch die Drehstellung der antreibenden Spindel bestimmt, unabhängig ist z.B. von Alterungserscheinungen der Hebelfeder der Kupplung oder einer veränderten geschlossenen Stellung bei Abrieb der Kupplungsbeläge.

In einer Weiterbildung kann vorgesehen sein, dass die Kurvenbahn eine solche Kurvenform aufweist, dass die in Verschieberichtung auf den Schlitten ausgeübte Kraft einer vorgegebenen Funktion des Ausrückweges folgt. Der Ausrückweg ist der axial von dem Andrückmittel zurückgelegte Weg. Die vorgegebenen Funktion des Ausrückweges kann dabei ein Maximum aufweisen, kann aber auch eine Konstante sein. Mit vorgegebener Funktion ist insbesondere gemeint, dass die Kurvenbahn eine vorgegebene funktionale Beziehung zwischen der Verschiebung (dem Weg) des Schlittens und der Verschiebung des Andrückmittels bzw. der auf den Schlitten dabei ausgeübten Kraft in Bewegungsrichtung bewirkt.

Das eingangs genannte Problem wird auch gelöst durch eine Kupplung im Antriebsstrang eines Kraftfahrzeuges mit einem erfindungsgemäßen Hebelsystem sowie ein Kraftfahrzeug mit einem Ausrücksystem für eine Kupplung umfassend ein erfindungsgemäßes Hebelsystem.

Im Folgenden werden Ausführungsbeispiele der Erfindung anhand der beiliegenden Zeichnungen erläutert. Dabei zeigen:
- Fig. 1: eine schematische Darstellung eines erfindungsgemäßen Hebelsystems;
- Fig. 2: ein Diagramm des Betätigungsweges x des Aktors über dem Betätigungsweg y der Kupplung;
- Fig. 3: ein Diagramm des Betätigungsweges y der Kupplung über der Betätigungskraft Fy;

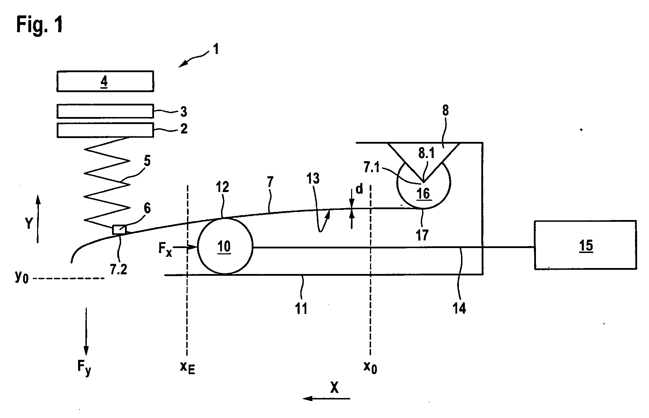

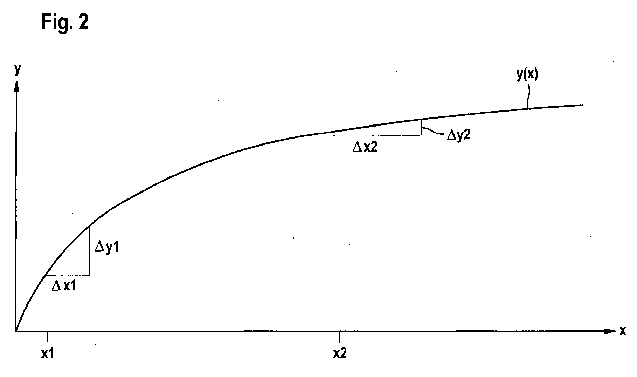

Fig. 1 zeigt eine Skizze eines Ausrücksystems zum Betätigen einer Kupplung im Antriebsstrang eines Kraftfahrzeuges zwischen Antriebsmotor und Schaltgetriebe. Das Prinzip eines derartigen Ausrücksystems ist aus der DE 10 2004 009832 grundsätzlich bekannt. In Fig. 1 schematisch dargestellt ist eine Kupplung 1 mit einer Druckplatte 2 sowie einer Kupplungsscheibe 3 und einer Gegendruckplatte 4. Zum Einkuppeln wird die Druckplatte 2 auf die mit einer nicht dargestellten Kurbelwelle drehfest verbundene Gegendruckplatte 4 gedrückt, so dass die zwischen Druckplatte 2 und Gegendruckplatte 4 angeordnete Kupplungsscheibe 3, die drehfest mit einer nicht dargestellten Getriebeeingangswelle verbunden ist, reibschlüssig verbunden. Die Druckplatte 2 ist verbunden mit einer Hebelfeder 5, die hier nur schematisch als Feder dargestellt ist. Die Hebelfeder 5 ist über ein Andrückmittel 6 mit einem Hebel 7 verbunden. Das Andrückmittel 6 sorgt dafür, dass die Hebelfeder 5 in bekannter Art und Weise um eine Kupplungsachse 9 - die Kupplungsachse 9 ist die Drehachse, um die die Kupplung im Betrieb rotiert -, die in der Regel mit der Achse der Getriebeeingangswelle sowie der Kurbelwellenachse zusammenfällt, drehbar gelagert ist. Insofern entspricht die bis hier beschriebene Anordnung der in der DE 10 2004 009832 zum Beispiel in Fig. 1 und 2 dargestellten Anordnung zur Betätigung einer Kupplung. Der Hebel 7 ist auf der einen Seite 7.1 des Hebels mit einem gehäuseseitigen Lager 8 schwenkbar um eine aus der Zeichenebene der Fig. 1 herausragende Achse 8.1 gelagert, auf der anderen Seite 7.2 mit dem Andrückmittel 6 verbunden. Das gehäuseseitige Lager umfasst eine Kreissegmentscheibe 16, an der der Hebel 7 angeordnet ist, sodass sich der Befestigungspunkt 17 des Hebels an der Kreissegmentscheibe 16 bei Drehung des Hebels um die Achse 8.1 auf einer Kreisbahn bewegt. Die Verbindung zwischen dem Hebel 7 und dem Andrückmittel 6 kann dabei so gestaltet sein, dass eine radiale Verschiebung bezogen auf die Kupplungsachse 9 erfolgen kann. Die radiale Verschiebung ist notwendig zum Ausgleich einer radialen Relativbewegung des Hebels 7 gegenüber dem Andrückmittel 6 bei einer Betätigung des Hebels 7. Der Hebel 7 stützt sich auf einem Schlitten 10 ab, der beispielsweise wie in der Fig. 1 der DE 10 2004 009832 dargestellt aus einer Anordnung von Rollen besteht, die beispielsweise in Form eines Dreiecks angeordnet sein können, wobei eine der Rollen in Kontakt mit dem Hebel 7 ist und zwei andere Rollen sich auf einer im Wesentlichen ebenen Schlittenlaufbahn 11 abstützen. Der Einfachheit halber ist der Schlitten 10 hier als Kreis dargestellt. Der Schlitten 10 stützt sich an dem Hebel 7 in einem verschiebbaren Auflagerpunkt 12 ab, wobei der Auflagerpunkt 12 bei Verschiebung des Schlittens 10 entlang einer Kurvenbahn 13 verschoben wird. Die Kurvenbahn 13 wird durch die dem Schlitten 10 zuwandte Seite des Hebels 7 gebildet. Der Hebel 7 kann dabei entsprechend der Skizze der Fig. 1 ein Stab oder eine Scheibe mit im Wesentlichen konstanter Dicke sein, kann aber ebenso eine beliebige andere Form aufweisen, so dass beispielsweise die Kurvenbahn 13 eine andere Form aufweist als die dem Schlitten 10 abgewandte Seite des Hebels 7. Der Schlitten 10 ist über eine Spindel 14 mittels eines Elektromotors 15, der zumindest radial zur Kupplungsachse 9 gehäusefest gelagert ist, entlang der Koordinate x verschiebbar. Wird der Schlitten 10 entlang der Schlittenlaufbahn 11 in eine der beiden durch die Koordinate x angegebenen Richtungen verschoben, so ändert sich die (bezogen auf die Kupplungsachse 9) axiale Stellung des Andrückmittels 6. Für die axiale Stellung des Andrückmittels 6 ist in Fig. 1 eine Koordinate y eingezeichnet, für die radiale Stellung des Schlittens 10 ist entsprechend die Koordinate x eingezeichnet. Die Nullpunkte beider Koordinaten sind zunächst willkürlich, für die Koordinate x kann als Nullpunkt beispielsweise die radial weiteste nach außen gefahrene Stellung des Auflagerpunktes 12 des Schlittens 10 angenommen werden. Diese Stellung ist in Fig. 1 durch eine gestrichelte Linie mit der Bezeichnung x₀ angedeutet. Zu der Stellung x₀ des Schlittens 10 bzw. des Auflagerpunktes 12 gehört eine Stellung y₀ des Andrückmittels 6. Wird der Wert x und damit die Stellung des Schlittens 10 vom Wert x₀ in Richtung der Koordinate x erhöht, so wird das Andrückmittel 6 in Richtung der Koordinate ausgehend von einer Nullstellung y₀ bewegt, dabei wird die Druckplatte 2 auf die Gegendruckplatte 4 zubewegt, die Kupplung also geschlossen. Die Stellung x₀ des Schlittens 10 bezeichnet im vorliegenden Ausführungsbeispiel die geöffnete Stellung der Kupplung. Es handelt sich hier also um eine aktiv zugedrückte Kupplung. Prinzipiell ist es aber ebenso möglich, auf die gleiche Art und Weise eine aktiv zu öffnende Kupplung zu betreiben, die also in der Ruhestellung geschlossen und nicht geöffnet ist.

Der Weg y des Andrückmittels 6 ist eine Funktion des Weges x des Schlittens 10, es kann also eine Funktion y = f(x) angegeben werden. Diese Funktion ist im Wesentlichen abhängig von der Gestalt der Kurvenbahn 13. Erfindungsgemäß wird die Kurvenbahn 13 nun so gestaltet, dass ein proportionaler Zusammenhang zwischen den Wegen x und y besteht, y = k * x. Der Weg x des Schlittens 10 kann somit recht einfach in einen Weg y des Andrückmittels 6 umgerechnet werden. Statt eines proportionalen Zusammenhangs sind hier auch andere Zusammenhänge denkbar, beispielsweise insbesondere ein Zusammenhang der Wege x und Y, die die Federkennlinie der Hebelfeder 5 berücksichtigen. Zu jeder Kombination aus dem Betätigungsweg x des Schlittens 10 und dem Weg y des Andrückmittels 6 gehören entsprechende Kräfte, die das Andrückmittel 6 in axialer Richtung der Kupplungsachse 9 auf den Hebel 7 ausübt und einer Kraft Fx , die der Schlitten 10 in axialer Richtung der Spindel 14 auf diese ausübt, es kann also ein Zusammenhang angegeben werden: Fx = f(Fy). Die Kraft Fy hängt insbesondere von der Federcharakteristik der Hebelfeder 5 ab. Bei bekannter Charakteristik der Hebelfeder 5 kann die Kurvenbahn 13 des Hebels 7 nun so ausgelegt werden, dass ein linearer oder nahezu linearer Zusammenhang der Kräfte Fx und Fy besteht, wobei die Kraft auch ein Maximum an einer Stelle x des Betätigungsweges aufweisen kann. Ebenso ist es möglich, durch geeignete Wahl der Kurvenbahn 13 eine beispielsweise über den Weg x konstante Kraft Fx zu erzeugen. Das Drehmoment des Elektromotors 15 ist in einem solchen Fall über den gesamten Stellweg konstant.

Die Kontur der Kurvenbahn 13 kann für die zuvor genannten Auslegungsfälle jeweils abschnittsweise über den Weg x ausgelegt werden, beispielsweise als Geradenstücke, die durch eine glatte Kurve, beispielsweise ein Spline, angenähert werden. Soll beispielsweise ein proportionaler Zusammenhang zwischen den Wegen x und y erzeugt werden, so wird ausgehend vom Wert x₀ die Kurvenbahn 13 als Geradenstück angenähert und um einen Wert Δx in Richtung der x-Koordinate verschoben. Dabei wird der Hebel 7 um das Gehäuse-seitige Lager 8 gedreht, wobei das Andrückmittel 6 in Richtung der Koordinate y verschoben wird. Ausgehend von dem Wert x₀ + Δx wird nun wiederum ein Teilstück der Kurvenbahn 13 durch eine Gerade mit der gewünschten Steigung Δy/Δx angenähert. Dieser Vorgang wird wiederholt, bis der Schlitten 10 eine Stellung x_{E} erreicht hat, die der geschlossenen Kupplungsstellung entspricht. Bei der geschlossenen Kupplungsstellung ist dabei ein Verschleiß, der im Betrieb der Kupplung auftritt, zu berücksichtigen, es ist also gewissermaßen eine "Zugabe" auf den Endweg bzw. Endpunkt x_{E} zu geben. Entsprechend verläuft die Auslegung, wenn z. B. die Kraft konstant gehalten werden soll. Über eine Steigung dy/dx in einem beliebigen Auflagerpunkt 12 und die bekannte Federcharakteristik der Hebelfeder 5 kann für jeden Betätigungsweg x des Schlittens 10 eine Kraft Fx, die auf die Spindel 14 wirkt, angegeben werden. Durch wiederum eine abschnittsweise Näherung der Kurvenbahn 13 mit Geradenstücken kann so eine z. B. gleich bleibende Kraft Fx oder eine mit dem Betätigungsweg x abnehmende Kraft oder dergleichen beliebiger Kraft/Wegcharakteristik für den Betätigungsweg x des Schlittens 10 erzeugt werden.

Fig. 2 zeigt ein Diagramm des Betätigungsweges x des Aktors über dem Betätigungsweg y der Kupplung. Es handelt sich hier um eine degressive Kennlinie. Zu Beginn des Betätigungsweges bei x = 0 hat die Kurve eine große Steigung, eine geringe Verschiebung des Aktors um einen Wert Δx hat eine vergleichsweise große Verschiebung der Kupplung um einen Weg Δy zur Folge. Die Steigung der Kurve wird mit zunehmendem Betätigungsweg x geringer. Dies ist an zwei Beispielen x1 und x2 mit zugehörigen Werten Δx1, Δy1 und Δx2, y2 dargestellt. Die Steigung der Kurve Δy / Δx ist ein Maß für die Übersetzung des Kurvengetriebes, das durch die Kurvenbahn 13 im Zusammenwirken mit dem Schlitten 10, der auf der Schlittenlaufbahn 11 gebildet wird. Das Übersetzungsverhältnis Δx / Δy nimmt über den Betätigungsweg x also zu, entsprechend nimmt die Steigung der Kurve Δy / Δx ab.

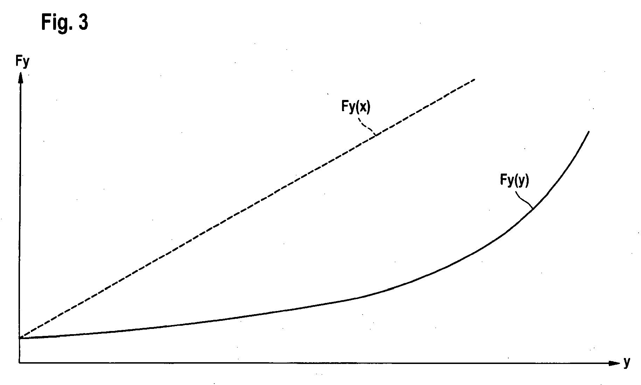

Fig. 3 zeigt ein Diagramm des Betätigungsweges y der Kupplung über der Betätigungskraft Fy. Diese Kurve ist progressiv, die Steigung nimmt also mit zunehmendem Betätigungsweg y zu. Die degressive Kurve des Betätigungsweges x des Aktors über dem Betätigungsweg y der Kupplung kann nun so ausgelegt werden, dass der Betätigungsweg x des Aktors über der Betätigungskraft Fy bei einer zugedrückten Kupplung einen linearen Verlauf hat, dies ist als gestrichelte Kurve Fy(x) in Fig. 3 dargestellt. Die Kennlinie der Kupplungskraft über dem Kupplungsweg sowie die Kennlinie des Betätigungsweges y der Kupplung über dem Betätigungsweg x des Aktors können zu einer Kennlinie Betätigungsweg x des Aktors über der Betätigungskraft Fy(x) zusammengefasst werden. Man erhält also eine Kennlinie Fy(y(x)). Im vorliegenden Ausführungsbeispiel ist die letztgenannte Kennlinie Fy(x) linear.

### Bezugszeichenliste

- 1: Kupplung
- 2: Druckplatte
- 3: Kupplungsscheibe
- 4: Gegendruckplatte
- 5: Hebelfeder
- 6: Andrückmittel
- 7: Hebel
- 8: Gehäuseseitiges Lager
- 9: Kupplungsachse
- 10: Schlitten
- 11: Schlittenlaufbahn
- 12: Auflagerpunkt
- 13: Kurvenbahn
- 14: Spindel
- 15: Elektromotor
- 16: Kreissegmentscheibe
- 17: Befestigungspunkt
- x: Betätigungsweges des Aktors
- y: Betätigungsweges der Kupplung
- Fy: Kupplungskraft
- Fx: Aktorkraft

## Patentansprüche

1. Hebelsystem zur Betätigung einer Kupplung in einem Antriebsstrang eines Kraftfahrzeuges, umfassend einen Hebel (7), der an einem Ende (7.1) um ein gehäuseseitigen Lager (8) drehbar gelagert ist und mit dem anderen Ende (7.2) in Wirkverbindung mit einem Andrückmittel (6) ist, welches mit einer Hebelfeder (5) der Kupplung verbunden ist und dafür sorgt, dass die Hebelfeder (5) um eine Kupplungsachse (9) drehbar gelagert ist, wobei sich der Hebel (7) auf einem Schlitten (10) in einem Auflagerpunkt (12) abstützt und der Auflagerpunkt (12) bei Verschiebung des Schlittens (10) entlang einer Kurvenbahn (13) verschoben wird, wobei die Kurvenbahn (13) durch die dem Schlitten (10) zugewandte Seite des Hebels (7) gebildet wird, so daß sich der Hebel (7) mit dem auf der Kurvenbahn (13) gelegenen Auflagerpunkt (12) an dem in radialer Richtung verschiebbaren Schlitten (10), der mittels einer motorisch (15) angetriebenen Spindel (14) verschiebbar ist, abstützt, wobei die Kurvenbahn (13) eine solche Kurvenform aufweist, dass der Verschiebeweg (y) des Andrückmittels (6) in Richtung der Kupplungsachse eine vorgegebene Funktion des Verschiebeweges (x) des Schlittens in radialer Richtung zur Kupplungsachse ist.

2. Hebelsystem nach Anspruch 1, **dadurch gekennzeichnet, dass** die Kurvenbahn (13) eine solche Kurvenform aufweist, dass der Verschiebeweg (y) des Andrückmittels (6) proportional zum Verschiebeweg (x) des Schlittens (10) ist.

3. Hebelsystem nach Anspruch 1, **dadurch gekennzeichnet, dass** die Kurvenbahn (13) eine solche Kurvenform aufweist, dass die in Verschieberichtung (x) auf den Schlitten ausgeübte Kraft einer vorgegebenen Funktion des Ausrückweges (y) folgt.

4. Hebelsystem nach Anspruch 3, **dadurch gekennzeichnet, dass** die vorgegebenen Funktion ein Maximum aufweist.

5. Hebelsystem nach Anspruch 3, **dadurch gekennzeichnet, dass** die vorgegebene Funktion eine Konstante ist.

6. Hebelsystem nach einem der Ansprüche 1 bis 5, **dadurch gekennzeichnet, dass** das Andrückmittel (6) ein Einrücklager ist, das mit einer Hebelfeder (5) einer unbetätigt geöffneten Kupplung verbunden ist und das Einrücklager in Wirkverbindung mit der Hebelfeder (5) steht.

7. Hebelsystem nach Anspruch 6, **dadurch gekennzeichnet, dass** die Kurvenbahn (13) eine solche Kurvenform aufweist, dass das Verhältnis des Verschiebewegs (y) des Einrücklagers (6) zum Verschiebeweg (x) des Schlittens (10) größer ist in Bereichen kleiner erwarteter Betätigungskräfte am Einrücklager und kleiner ist in Bereichen größerer erwarteter Betätigungskräfte am Einrücklager.

## Claims

1. Lever system for actuating a clutch in a drive train of a motor vehicle, comprising a lever (7) which is mounted at one end (7.1) such that it can be rotated about a housing-side bearing (8) and is drive-connected with the other end (7.2) to a pressure means (6) which is connected to a lever spring (5) of the clutch and ensures that the lever spring (5) is mounted such that it can be rotated about a clutch axis (9), the lever (7) being supported on a slide (10) at a support point (12), and the support point (12) being displaced during displacement of the slide (10) along a curved path (13), the curved path (13) being formed by that side of the lever (7) which faces the slide (10), with the result that the lever (7) is supported, by way of the support point (12) which is situated on the curved path (13), on the slide (10) which can be displaced in the radial direction and can be displaced by means of a spindle (14) which is driven by motor (15), the curved path (13) having such a curve shape that the displacement travel (y) of the pressure means (6) in the direction of the clutch axis is a predefined function of the displacement travel (x) of the slide in the radial direction with respect to the clutch axis.

2. Lever system according to Claim 1, **characterized in that** the curved path (13) has such a curve shape that the displacement travel (y) of the pressure means (6) is proportional to the displacement travel (x) of the slide (10).

3. Lever system according to Claim 1, **characterized in that** the curved path (13) has such a curve shape that the force which is exerted on the slide in the displacement direction (x) follows a predefined function of the disengagement travel (y).

4. Lever system according to Claim 3, **characterized in that** the predefined function has a maximum.

5. Lever system according to Claim 3, **characterized in that** the predefined function is a constant.

6. Lever system according to one of Claims 1 to 5, **characterized in that** the pressure means (6) is an engagement bearing which is connected to a lever spring (5) of a clutch which is open in the non-actuated state, and the engagement bearing is operatively connected to the lever spring (5).

7. Lever system according to Claim 6, **characterized in that** the curved path (13) has such a curve shape that the ratio of the displacement travel (y) of the engagement bearing (6) to the displacement travel (x) of the slide (10) is greater in regions of low expected actuating forces on the engagement bearing and is smaller in regions of higher expected actuating forces on the engagement bearing.

## Revendications

1. Système à levier pour l'actionnement d'un embrayage dans une chaîne cinématique d'un véhicule automobile, comprenant un levier (7), qui est monté à une extrémité (7.1) de manière à pouvoir tourner autour d'un palier (8) du côté du boîtier, et qui, à l'autre extrémité (7.2), est en liaison fonctionnelle avec un moyen d'application de pression (6) qui est connecté à un ressort de levier (5) de l'embrayage et fait en sorte que le ressort de levier (5) soit monté de manière à pouvoir tourner autour d'un axe d'embrayage (9), le levier (7) s'appuyant sur un chariot (10) dans un point d'appui (12) et le point d'appui (12) étant déplacé lors du déplacement du chariot (10) le long d'une piste de came (13), la piste de came (13) étant formée par le côté du levier (7) tourné vers le chariot (10), de telle sorte que le levier (7) s'appuie avec le point d'appui (12) placé sur la piste de came (13) contre le chariot (10) déplaçable dans la direction radiale, lequel chariot peut être déplacé au moyen d'une broche (14) entraînée par un moteur (15), la piste de came (13) présentant une forme de came telle que la distance de déplacement (y) du moyen d'application de pression (6) dans la direction de l'axe de l'embrayage soit une fonction prédéfinie de la distance de déplacement (x) du chariot dans la direction radiale par rapport à l'axe de l'embrayage.

2. Système à levier selon la revendication 1, **caractérisé en ce que** la piste de came (13) présente une forme de came telle que la distance de déplacement (y) du moyen d'application de pression (6) soit proportionnelle à la distance de déplacement (x) du chariot (10).

3. Système à levier selon la revendication 1, **caractérisé en ce que** la piste de came (13) présente une forme de came telle que la force exercée dans la direction de déplacement (x) sur le chariot dépende d'une fonction prédéfinie de la distance de débrayage (y).

4. Système à levier selon la revendication 3, **caractérisé en ce que** la fonction prédéfinie présente un maximum.

5. Système à levier selon la revendication 3, **caractérisé en ce que** la fonction prédéfinie est une constante.

6. Système à levier selon l'une quelconque des revendications 1 à 5, **caractérisé en ce que** le moyen d'application de pression (6) est un palier d'embrayage qui est connecté à un ressort de levier (5) d'un embrayage ouvert lorsqu'il n'est pas actionné, et le palier d'embrayage est en liaison fonctionnelle avec le ressort de levier (5) .

7. Système à levier selon la revendication 6, **caractérisé en ce que** la piste de came (13) présente une forme de came telle que le rapport de la distance de déplacement (y) du palier d'embrayage (6) par rapport à la distance de déplacement (x) du chariot (10) soit supérieur dans les régions de moindre force d'actionnement attendue au niveau du palier d'embrayage et soit inférieur dans les régions de plus grande force d'actionnement attendue au niveau du palier d'embrayage.
